# EUROPÄISCHE PATENTSCHRIFT

(11) **EP 2 463 688 B1**
(45) Veröffentlichungstag und Bekanntmachung des Hinweises auf die Patenterteilung: **14.08.2019**
(21) Anmeldenummer: 11190459.5
(22) Anmeldetag: 24.11.2011
(51) Int. Cl.: G01V 8/20

(54) **Verfahren zur Erfassung von Objekten mittels eines Lichtgitters**
Method for detecting objects using a light grid
Procédé de détection d'objets à l'aide d'une grille lumineuse

(30) Priorität: 13.12.2010 DE 102010054315
(43) Veröffentlichungstag der Anmeldung: 13.06.2012
(73) Patentinhaber: Leuze electronic GmbH + Co KG, 73277 Owen/Teck (DE)
(72) Erfinder: Argast, Martin, 72584 Hülben (DE)
(74) Vertreter: Ruckh, Rainer Gerhard

(56) Entgegenhaltungen:
- EP-A1- 2 256 523
- EP-A2- 1 876 383
- DE-A1- 4 305 559
- JP-A- 2007 271 537
- US-A1- 2005 230 604
- US-A1- 2008 074 652

## Beschreibung

Die Erfindung betrifft ein Lichtgitter sowie ein Verfahren zur Erfassung von Objekten mittels eines Lichtgitters.

Bekannte Lichtgitter weisen eine Sendereinheit mit einer linearen Anordnung von Lichtstrahlen emittierenden Sendern und eine Empfängereinheit mit einer linearen Anordnung von Lichtstrahlen empfangenden Empfängern auf. Jeweils ein Sender und ein zugeordneter Empfänger bilden eine Strahlachse. Die Strahlachsen des Lichtgitters werden zyklisch einzeln nacheinander aktiviert. Die Sendereinheit und Empfängereinheit sind an gegenüberliegenden Rändern eines Überwachungsbereichs angeordnet. Bei freiem Überwachungsbereich gelangen die Lichtstrahlen der Sender aller Strahlachsen ungehindert zu den zugeordneten Empfängern. Bei einem Objekteingriff wird wenigstens eine Strahlachse unterbrochen. In einer Auswerteeinheit wird anhand der Empfangssignale der Empfänger ein binäres Schaltsignal generiert, dessen Schaltzustände angeben, ob sich ein Objekt im Überwachungsbereich befindet oder nicht. Derartige Lichtgitter werden beispielsweise im Bereich der Sicherheitstechnik eingesetzt. Je nach Applikation können die Sendereinheit und Empfängereinheit horizontal oder waagrecht orientiert werden. Unabhängig von dieser Orientierung ist eine Erfassung komplexer Objektformationen, insbesondere Geometriedaten, mit derartigen Lichtgittern nur eingeschränkt möglich.

Weiterhin ist es bekannt, flächige Überwachungsbereiche mit Flächendistanzsensoren, das heißt scannenden Distanzsensoren, oder mit Kamerasystemen zu überwachen. Derartige Sensorsysteme weisen einen konstruktiv hohen Aufwand auf. Auch die Signalauswertung ist bei derartigen Sensorsystemen unerwünscht aufwändig.

Die JP 2007-271537 A betrifft einen nach dem Reflexionsprinzip arbeitenden Sensor. Der Sensor weist eine matrixförmige Anordnung von Lichtstrahlen emittierenden Sendern und eine matrixförmige Anordnung von Lichtstrahlen empfangen Empfängern auf. Gruppen einzelner Sender und Empfänger können einzeln aktiviert werden.

Die US 2005/0230604 betrifft ein Überwachungssystem mittels dessen eine Bilderfassung von Objekten und Personen ermöglicht wird. Die Bilderfassung erfolgt mittels eines Bilderfassungssystems, welches zur Erfassung von Personen und Objekten in einer Detektionszone an einem Rand der Detektionszone angeordnet ist. Das Bildverarbeitungssystem emittiert einerseits elektromagnetische Strahlung und empfängt zugleich von einer Person oder einem Objekt zurückreflektierte Strahlung. In einer Rechnereinheit werden die so mit dem Bilderfassungssystem registrierten Bildsignale ausgewertet.

Die EP 2 256 523 A1 betrifft einen Sensor für eine automatische Türüberwachung. Die Komponenten des Sensors sind am oberen Rahmen der Tür angeordnet. Der Sensor arbeitet nach dem Lichttasterprinzip und umfasst eine Linearanordnung von Lichtstrahlen emittierenden Lichtsendern und zwei matrixförmige Anordnungen von Lichtempfängern. Über eine Kontrolleinheit können nur einige der Lichtsender aktiviert werden. Je nachdem, welche der Lichtsender nicht aktiviert sind, können die Empfangssignale einiger Empfänger nicht ausgewertet werden.

Der Erfindung liegt die Aufgabe zugrunde, ein Lichtgitter der eingangs genannten Art bereitzustellen, mittels dessen bei geringem konstruktiven Aufwand mit möglichst geringen Ansprechzeiten eine zuverlässige Objektdetektion ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft ein Verfahren, mit dem zur Objektdetektion die aktuellen Empfangssignale der Empfänger mit vorgegebenen Referenzwerten verglichen werden.

Mit dem erfindungsgemäßen Verfahren können mit sehr kurzen Ansprechszeiten auch komplexe Objektstrukturen zuverlässig detektiert werden. Diese kurze Ansprechzeit wird erfindungsgemäß dadurch erhalten, dass objektabhängig selektiv nur einzelne Teilbereiche der Sender und Empfänger herangezogen werden. Die Anzahl der auswertenden Empfangssignale der Empfänger wird dadurch gering gehalten, wodurch die Zeit zur Auswertung dieser Empfangssignale gegenüber einem Lichtgitter, bei welchem alle Sender und Empfänger zur Objektdetektion herangezogen werden, erheblich reduziert wird.

Um eine gegenseitige Beeinflussung der einzelnen Strahlachsen auszuschließen und um die Empfangssignale der Empfänger eindeutig den Lichtstrahlen der zugeordneten Sendern zuordnen zu können, werden innerhalb der aktivierten Bereiche der matrixförmigen Anordnungen der Sender und Empfänger die von einzelnen Sendern und Empfängern gebildeten Strahlachsen einzeln zyklisch nacheinander aktiviert.

Dadurch entsteht eine bestimmte Zykluszeit, die zur Aktivierung sämtlicher Strahlachsen der für die Objektdetektion aktiven Sender- und Empfängerbereiche benötigt wird. Da nur selektiv Teilbereiche der Anordnungen der Sender und Empfänger zur Objektdetektion benötigt und aktiviert sind, kann diese Zykluszeit und damit auch die Ansprechzeit, innerhalb derer die Objektdetektion erfolgt und eine entsprechende Objektmeldung ausgegeben wird, gering gehalten werden.

In einer Ausführungsart, die nicht Teil der Erfindung ist, werden die für die Objektdetektionen aktivierten Bereiche der matrixförmigen Anordnungen der Sender und Empfänger durch Parametrierungen vorgegeben.

Alternativ oder zusätzlich werden die für die Objektdetektionen aktivierten Bereiche der matrixförmigen Anordnungen der Sender und Empfänger unabhängig von zuvor ermittelten Messwerten des Lichtgitters variiert.

Erfindungsgemäß werden weiter die für die Objektdetektionen aktivierten Bereiche der matrixförmigen Anordnungen der Sender und Empfänger in Abhängigkeit von Kenngrößen der zu detektierenden Objekte vorgegeben.

Die jeweils aktivierten Bereiche der Sender- und Empfängeranordnungen sind dadurch optimal an die jeweils durchzuführenden Objektdetektionen angepasst, und zwar derart, dass mit möglichst geringen Größen von aktivierten Bereichen von Sendern und Empfängern die zu detektierenden Objektstrukturen vollständig erfasst werden können.

Besonders vorteilhaft werden mit dem Lichtgitter Geometrien und/oder Positionen und/oder Geschwindigkeiten von Objekten erfasst.

Die Nachweisempfindlichkeit des Lichtgitters kann dadurch noch erhöht werden, dass zur Objektdetektion die aktuellen Empfangssignale der Empfänger mit vorgegebenen Referenzwerten verglichen werden.

In einer zweckmäßigen Ausgestaltung werden bei den Objektdetektionen nicht aktivierte Bereiche von Sendern als Anzeigeelemente genutzt.

Durch diese Doppelfunktion der Sender wird ein besonders kostengünstiger Aufbau des Lichtgitters realisiert.

Besonders vorteilhaft sind die Sender von organischen Leuchtdioden und die Empfänger von organischen Fotodioden gebildet.

Damit können auch großflächige Anordnungen von Sendern und Empfängern mit einem geringen Kostenaufwand realisiert werden.

Das Lichtgitter wird besonders vorteilhaft in Bereichen eingesetzt, wo Fließprozesse überwacht werden müssen und dabei Objekte hinsichtlich ihrer Lagen, Größen, Bewegungsrichtungen und Geschwindigkeiten erfasst werden müssen.

Die Erfindung wird im Folgenden anhand der Zeichnungen erläutert. Es zeigen:
- Figur 1:: Blockschaltbild eines Ausführungsbeispiels des erfindungsgemäßen Lichtgitters.
- Figur 2:: Anordnung des Lichtgitters gemäß Figur 1 an einem Förderband.
- Figur 3:: Schematische Darstellung einer selektiven Aktivierung von Bereichen des Senderarrays und Empfängerarrays des Lichtgitters gemäß den Figuren 1 und 2.
- Figur 4:: Draufsicht auf das Senderarray gemäß Figur 4.
- Figur 5:: Beispiel einer selektiven Aktivierung von Sendern und Empfängern des Lichtgitters gemäß den Figuren 1 und 2 zur Detektion eines bewegten quaderförmigen Objekts.
- Figur 6 a,b:: Zeitdiagramme der Signalauswertung für die Anordnung gemäß Figur 5.
- Figur 7:: Variante der Anordnung gemäß Figur 5.
- Figur 8:: Zeitdiagramme der Signalauswertung für die Anordnung gemäß Figur 7.
- Figur 9:: Weiteres Ausführungsbeispiel einer Objekterfassung mit dem Lichtgitter gemäß den Figuren 1 und 2.
- Figur 10:: Weiteres Ausführungsbeispiel einer Objekterfassung mit dem Lichtgitter gemäß den Figuren 1 und 2.
- Figur lla,b:: Weiteres Ausführungsbeispiel einer Objekterfassung mit dem Lichtgitter gemäß den Figuren 1 und 2.

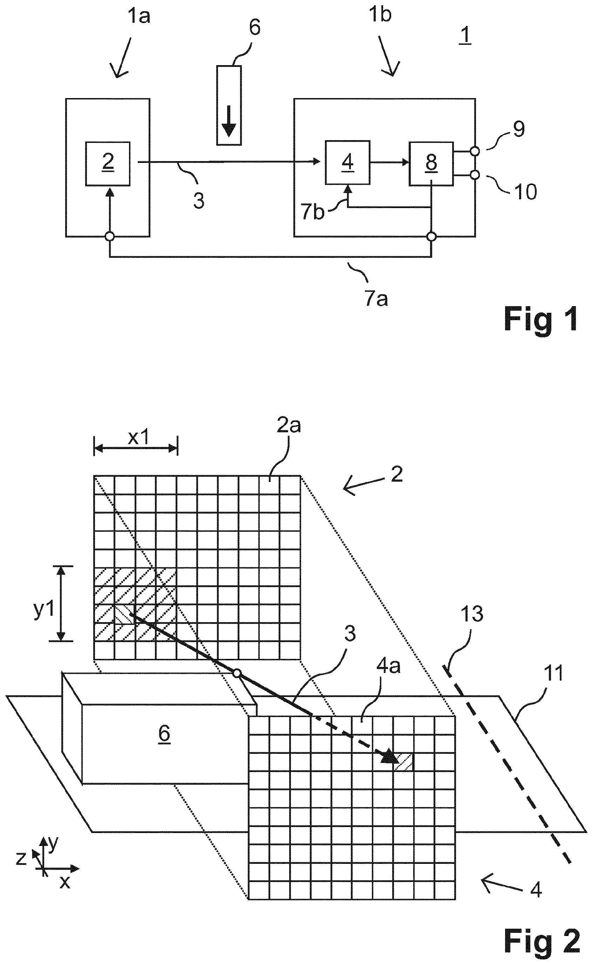

Figur 1 zeigt ein Blockschaltbild einer Ausführungsform des erfindungsgemäßen Lichtgitters 1 zur Objekterfassung in einem Überwachungsbereich. Das Lichtgitter 1 umfasst eine Sendereinheit 1a und eine Empfangseinheit 1b, die an gegenüberliegenden Rändern des Überwachungsbereichs angeordnet sind.

Das Lichtgitter 1 umfasst ein Senderarray 2 mit einer matrixförmigen Anordnung von Sendern 2a (dargestellt in Figur 2), wobei die einzelnen Sender 2a aus organischen Leuchtdioden (OLED) bestehen. Bei diesem Überwachungsbereich gelangen die von den Sendern 2a emittierten Lichtstrahlen 3 auf ein Empfängerarray 4, bestehend aus einer matrixförmigen Anordnung von Empfängern 4a (dargestellt in Figur 2), welche jeweils aus organischen Fotodioden (OPD) bestehen. Bei freiem Überwachungsbereich gelangen die Lichtstrahlen 3 der Sender 2a des Senderarrays 2 ungehindert zu zugeordneten Empfängern 4a des Empfängerarrays 4. Bei Eindringen eines Objekts 6 in den Überwachungsbereich erfolgt eine Unterbrechung einiger Lichtstrahlen 3, wodurch das Objekt 6 detektiert wird.

Die Senderarrays 2 und Empfängerarrays 4 sind über Zuleitungen 7a, 7b an eine Auswerte- und Steuereinheit 8 angeschlossen. Diese übernimmt die Ansteuerung der Sender 2a und Empfänger 4a sowie die Auswertung der Empfangssignale der Empfänger 4a. In der Auswerte- und Steuereinheit 8 werden in Abhängigkeit von gespeicherten Parameterwerten oder abhängig von zuvor ermittelten Messwerten selektiv einzelne Bereiche des Senderarrays 2 und Empfängerarrays 4 aktiviert. Innerhalb der aktivierten Bereiche werden zyklisch einzeln nacheinander einzelne Strahlachsen, das heißt einzelne Sender 2a und diesen zugeordnete Empfänger 4a aktiviert. Dann werden zur Objektdetektion die Empfangssignale der aktivierten Empfänger 4a ausgewertet. Als Objektmeldung kann ein binäres Schaltsignal generiert werden, dessen Schaltzustände angeben, ob sich allgemein ein Objekt 6 oder spezifisch ein bestimmtes insbesondere sicherheitskritisches Objekt 6 im Überwachungsbereich befindet oder nicht.

Das Schaltsignal wird über einen Schaltausgang 9 ausgegeben. Komplexere Objektmeldungen werden über eine serielle Schnittstelle 10 ausgegeben, die auch zum Einlesen von Parameterwerten dient. Zur Durchführung der Objektdetektion kann ein Referenzwertvergleich durchgeführt werden, das heißt aktuell ermittelte Empfangssignale werden mit in der Auswerte- und Steuereinheit 8 abgespeicherten Referenzwerten verglichen.

Figur 2 zeigt die geometrische Zuordnung des Senderarrays 2 und des Empfängerarrays 4 des Lichtgitters 1 gemäß Figur 1 zu einem Objekt 6, das sich auf einem Förderband 11 hindurchbewegt. Die Transportrichtung verläuft in x-Richtung. Zur Lagebestimmung einer Ecke des rechteckförmigen Objektes 6 genügt es, für einen kleinen aktivierten Bereich des Senderarrays 2, die Sender 2a des Bereiches xl, yl nacheinander zu aktivieren und mit nur einem Empfänger 4a die Empfangssignale mit dem Referenzempfangssignal bei freier Strecke zu vergleichen. Damit wird für die Messung die Durchlaufzeit auf die Summe von wenigen Aktivierungszyklen der Sender 2a und dem Einlesen der zugehörigen Empfangssignale begrenzt. Bei einem Bereich von 4 x 4 Sendern 2a liegt die Durchlaufzeit bei ca. 10 µs x 16 = 160 µs. Bei der Abfrage des gesamten Arrays mit zum Beispiel 100 x 100 Sendern 2a würde sich eine Durchlaufzeit von 100 ms ergeben. Nach der Objektidentifikation durch Vergleich von Objektgeometriedaten mit gespeicherten Referenzwerten, kann mit Hilfe der ermittelten Bewegungsdaten der Schaltzeitpunkt für die Schaltposition berechnet und ein Schaltsignal ausgegeben werden.

Da für jede Messaufgabe nicht nur die gesuchten Größen definiert, sondern auch einige Objektparameter, wie zum Beispiel die Rechteckform bei Behältern, bekannt sind, können Bereiche auf der Seite des Senderarrays 2 und Bereiche auf der Seite des Empfängerarrays 4 definiert werden und dann gezielt selektiv aktiviert werden. Im Allgemeinen kann dies durch Parametrierung geschehen. Für spezielle, kostenintensive Applikationen kann das Senderarray 2 auf ein bis zwei Senderzeilen und das Empfängerarray 4 auf wenige diskrete Empfänger 4a reduziert werden.

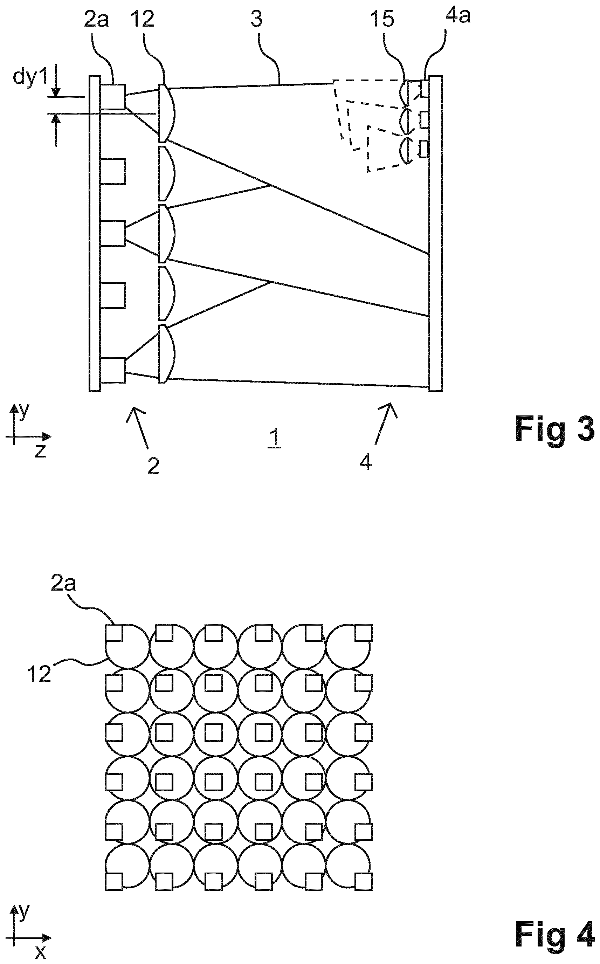

Figur 3 zeigt das Senderarray 2 des Lichtgitters 1 gemäß den Figuren 1 und 2 mit den einzelnen Sendern 2a, denen jeweils Sendeoptiken 12 so nachgeschaltet sind, dass ein ausreichender Bereich auf dem Empfängerarray 4 beleuchtet wird. Ebenso stellen Empfangsoptiken vor jedem Empfänger 4a des Empfängerarrays 4 sicher, dass der in Frage kommende Bereich des Senderarrays 2 erfasst werden kann. Damit lassen sich die Kreuzstrahlen aktivieren, wobei ein aktivierter Sender 2a bei freier Strecke nicht nur vom direkt gegenüberliegenden Empfänger 4a erfasst wird, sondern auch von einem versetzt angeordneten Empfänger 4a.

Figur 4 zeigt die Sender 2a in der x-y-Ebene mit den nachgeschalteten Senderoptiken. Durch die Wahl des Abstandes der Sendeoptik 12 vom zugehörigen Sender 2a kann die Aufstreuung des Sendelichtes eingestellt werden. Der Matrixrasterabstand der Sendeoptiken 12 wird etwas kleiner gewählt als der Matrixrasterabstand der Sender 2a, wodurch die Sendestrahlen trotz Aufstreuung im Bereich des Empfängerarrays 4 bleiben.

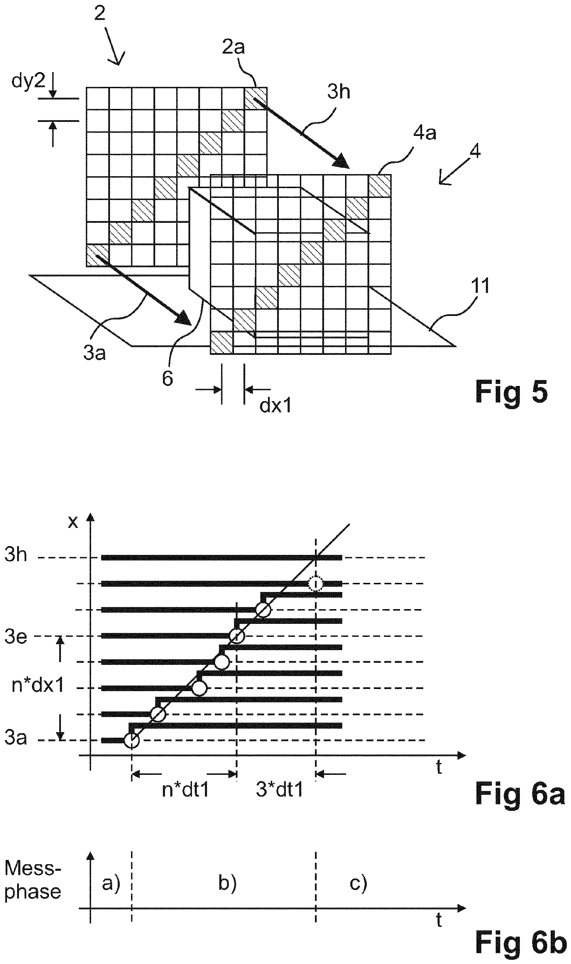

Figur 5 zeigt das erste Ausführungsbeispiel für die Erfassung der Objektgeometrien von rechteckförmigen Objekten 6 mit dem Lichtgitter 1 gemäß den Figuren 1 und 2. Unter der Voraussetzung, dass sich das Objekt 6 auf dem Förderband 11 von links nach rechts in x-Richtung bewegt, können folgende drei Messphasen unterschieden werden:
a) alle Strahlachsen des Lichtgitters 1 haben freie Strecken, das Objekt 6 befindet sich noch nicht im Bereich des Lichtgitters 1.

Es müssen lediglich die Strahlachsen des Lichtgitters 1 des Senders 2a links unten und des Empfängers 4a links unten aktiviert und abgefragt werden. Damit wird die einlaufende Objektkante mit der kürzest möglichen Ansprechzeit erfasst.
b) Die unterste Strahlachse hat Unterbrechung gemeldet, was bedeutet, dass die Objektvorderkante eingetaucht ist.

Ab jetzt wird die zweitunterste Strahlachse aktiviert, die jetzt ebenfalls schnell die um dx1 verschobene Objektposition meldet. Danach die drittunterste Strahlachse, und so weiter.

Figur 6 zeigt, wie aus dem Steigungsdreieck dx1/dt1 die Objektgeschwindigkeit v1 berechnet wird. Aus dem Ansprechen, das heißt Unterbrechen der Strahlachse ergibt sich die vorläufige Zeitdifferenz dtl.

Mit jeder weiteren unterbrochenen Strahlachse wird dtl präzisiert. Bei einer Objektvorderkante, die nicht stetig senkrecht verläuft, ergibt sich ein Mittelwert für dt1.

Wenn innerhalb von 2^{∗}dt1 keine weitere Strahlachse unterbrochen wird, gilt die Objekthöhe als erreicht. Die endgültige Steigung wird aus den um 3^{∗}dx1 zurückliegenden Strahlachsen berechnet.
c) Danach wird durch Aktivierung von Kreuzstrahlen des Lichtgitters 1 die Lage der oberen waagerechten Objektkante ermittelt. Ist der aktivierte Sender 2a tiefer als der zugeordnete Empfänger 4a, bewirkt die zum Sender 2a hingewandte Objektoberkante die Unterbrechung, bei tiefer liegendem Empfänger 4a die zum Empfänger 4a hingewandte Objektoberkante. Durch die Berücksichtigung der Schräge des aktivierten Kreuzstrahles kann mit Hilfe der ermittelten Objekthöhe die Lage der beiden Objektoberkanten in z-Richtung berechnet werden.

Auf der nicht aktiv genutzten Fläche des Senderarrays 2 können Texte oder Symbole angezeigt werden. Ein zur Textanzeige eingeschalteter Sender 2a stört den Empfänger 4a nicht, da das Gleichlicht empfangsseitig elektronisch unterdrückt wird. Zu Messzwecken kann ein bereits eingeschalteter Sender 2a ausgetastet werden.

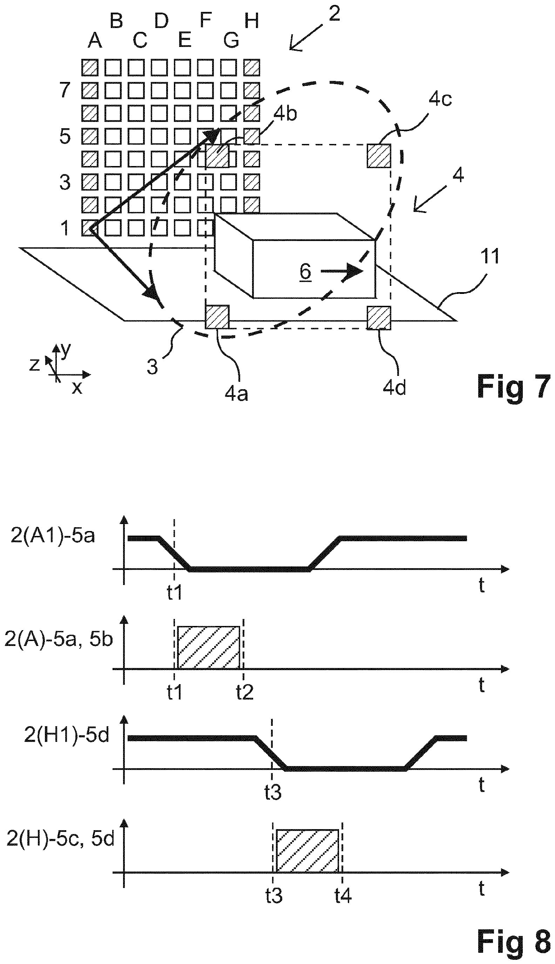

Figur 7 zeigt das zweite Ausführungsbeispiel für die Erfassung der Objektgeometrien von weitgehend rechteckförmigen Objekten 6. Mit zwei senkrecht verlaufenden Senderreihen (A1 bis A8) und (H1 und H8) kann eine redundante Objektinformation gewonnen werden um daraus genauere Geometriedaten zu gewinnen.

Figur 8 zeigt Diagramme für die zeitlichen Abfolgen von Objekterkennung und Objekthöhenerfassung. Die Objektvorderkante wird ein erstes Mal zum Zeitpunkt t1 und genau in gleicher Objekthöhe zum Zeitpunkt t3 erfasst und daraus die Objektgeschwindigkeit berechnet. Dazwischen kann die Objekthöhe, beziehungsweise die Lage der Objektoberkanten zwischen t1 und t2, ermittelt werden. Über die Objekthinterkante können weitere redundante Informationen gewonnen werden.

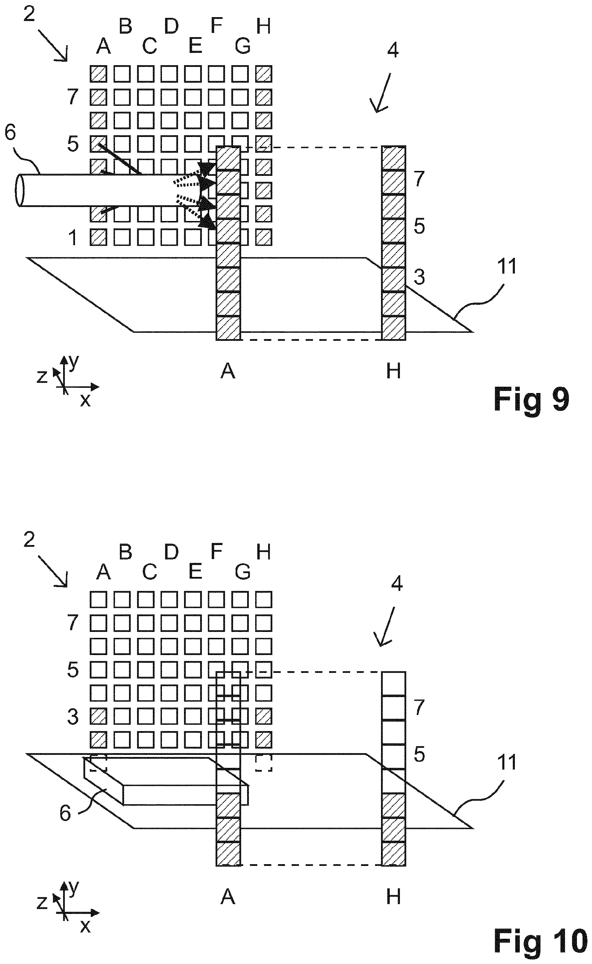

Figur 9 zeigt das dritte Ausführungsbeispiel für die Erfassung von in x-Richtung überstehenden Teilen des Objektes 6 mittels des Lichtgitters 1. Mit Hilfe von Kreuzstrahlen des Lichtgitters 1 werden der Objektdurchmesser und die Lage in y-Richtung ermittelt.

Figur 10 zeigt das vierte Ausführungsbeispiel für die Erfassung von flachen Objekten 6 auf dem Förderband 11. Das Förderband 11 wird permanent durch mindestens eine Strahlachse erfasst. So kann auch bei Höhenschwankungen ein flaches Objekt 6 auf dem Förderband 11 erkannt und bezüglich seiner Länge identifiziert werden.

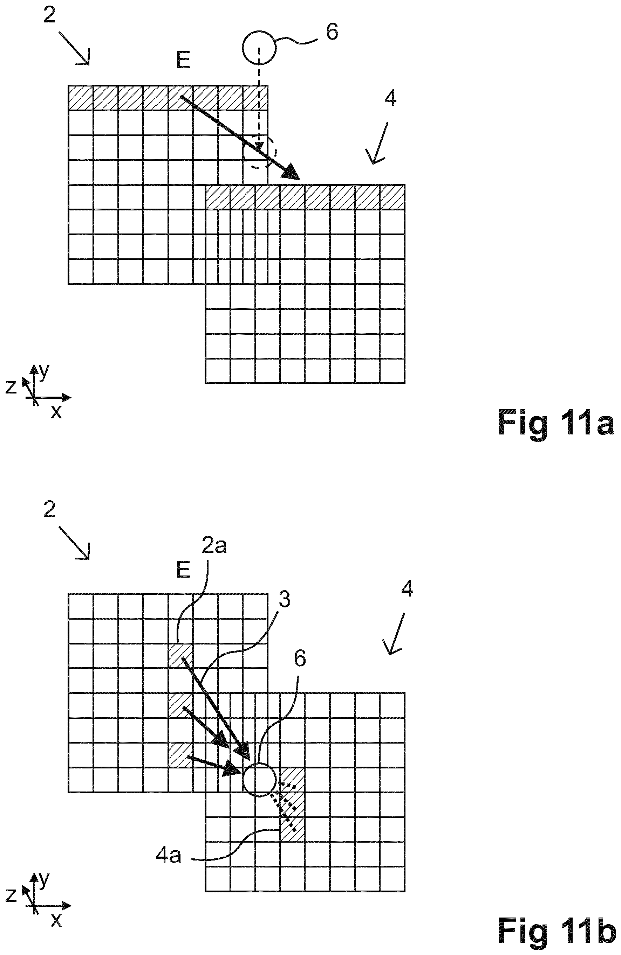

Figur 11 zeigt das fünfte Ausführungsbeispiel für die Erfassung von kleinen Objekten 6, die durch den Detektionsbereich des Senderarrays 2 und des Empfängerarrays 4 durchfallen. Dazu wird, wie in Figur 11a gezeigt, im ersten Schritt die oberste Sendezeile aktiviert, bis das Objekt 6 eintaucht und die entsprechende Sendespalte ermittelt ist. Danach kann entsprechend Figur 11b mit wenigen Kreuzstrahlen die Lage des durchfallenden Objektes 6 im Raum verfolgt werden.

### Bezugszeichenliste

- (1): Lichtgitter
- (1a): Sendereinheit
- (1b): Empfangseinheit
- (2): Senderarray
- (2a): Sender
- (3): Lichtstrahlen
- (4): Empfängerarray
- (4a): Empfänger
- (5):
- (6): Objekt
- (7a): Zuleitung
- (7b): Zuleitung
- (8): Auswerte- und Steuereinheit
- (9): Schaltausgang
- (10): Schnittstelle
- (11): Förderband
- (12): Sendeoptik

## Patentansprüche

1. Verfahren zur Erfassung von Objekten (6) mittels eines Lichtgitters (1), welches eine matrixförmige Anordnung von Lichtstrahlen (3) emittierenden Sendern (2a) und eine matrixförmige Anordnung von Lichtstrahlen (3) empfangenden Empfängern (4a) aufweist, wobei als matrixförmige Anordnung von Sendern (2a) ein Sendearray (2), bestehend aus einer Anordnung von in Spalten und Zeilen angeordneten Sendern (2a) vorgesehen ist, und wobei als matrixförmige Anordnung von Empfängern (4a) ein Empfängerarray (4), bestehend aus einer Anordnung von in Spalten und Zeilen angeordneten Empfängern (4a) vorgesehen ist, wobei zur Objektdetektion die Unterbrechung von Strahlachsen, welche jeweils von Lichtstrahlen (3), die von einem Sender (2a) zu wenigstens einem zugeordneten Empfänger (4a) geführt sind, gebildet werden, ausgewertet wird, und wobei zur Detektion von Objekten (6) selektiv vorgegebene Bereiche der matrixförmigen Anordnungen der Sender (2a) und Empfänger (4a) aktiviert werden können, **dadurch gekennzeichnet, dass** die für die Objektdetektionen aktivierten Bereiche der matrixförmigen Anordnungen der Sender (2a) und Empfänger (4a) in Abhängigkeit von Kenngrößen der zu detektierenden Objekte (6) vorgegeben werden.

2. Verfahren nach Anspruch 1, **dadurch gekennzeichnet, dass** innerhalb der aktivierten Bereiche der matrixförmigen Anordnungen der Sender (2a) und Empfänger (4a) die von einzelnen Sendern (2a) und Empfängern (4a) gebildeten Strahlachsen einzeln zyklisch nacheinander aktiviert werden.

3. Verfahren nach einem der Ansprüche 1 oder 2, **dadurch gekennzeichnet, dass** die für die Objektdetektionen aktivierten Bereiche der matrixförmigen Anordnungen der Sender (2a) und Empfänger (4a) unabhängig von zuvor ermittelten Messwerten des Lichtgitters (1) variiert werden.

4. Verfahren nach einem der Ansprüche 1 bis 3, **dadurch gekennzeichnet, dass** bei den Objektdetektionen nicht aktivierte Bereiche von Sendern (2a) als Anzeigeelemente genutzt werden.

5. Verfahren nach einem der Ansprüche 1 bis 4, **dadurch gekennzeichnet, dass** mit dem Lichtgitter (1) Geometrien und/oder Positionen und/oder Geschwindigkeiten von Objekten (6) erfasst werden.

6. Verfahren nach einem der Ansprüche 1 bis 5, **dadurch gekennzeichnet, dass** zur Objektdetektion die aktuellen Empfangssignale der Empfänger (4a) mit vorgegebenen Referenzwerten verglichen werden.

## Claims

1. A method for detecting objects (6) by means of a light grid (1) which has a matrix-shaped arrangement of transmitters (2a) emitting light beams (3) and a matrix-shaped arrangement of receivers (4a) receiving light beams (3), a transmitter array (2) consisting of an arrangement of transmitters (2a) arranged in columns and rows being provided as the matrix-shaped arrangement of transmitters (2a), and a receiver array (4) being provided as the matrix-shaped arrangement of receivers (4a), consisting of an arrangement of receivers (4a) arranged in columns and rows, wherein, for object detection, the interruption of beam axes which are each formed by light beams (3) which are guided from a transmitter (2a) to at least one associated receiver (4a), is evaluated and wherein, for the detection of objects (6), selectively predetermined regions of the matrix-shaped arrangements of the transmitters (2a) and receivers (4a) can be activated, **characterised in**
**that** the regions of the matrix-shaped arrangements of the transmitters (2a) and receivers (4a), activated for the object detections, are predetermined as a function of characteristic variables of the objects (6) to be detected.

2. A method according to claim 1, **characterised in that**, within the activated regions of the matrix-shaped arrangements of the transmitters (2a) and receivers (4a), the beam axes formed by individual transmitters (2a) and receivers (4a) are activated individually cyclically one after the other.

3. A method according to one of claims 1 or 2, **characterised in that** the areas of the matrix-shaped arrangements of the transmitters (2a) and receivers (4a), activated for the object detections, are varied independently of previously determined measured values of the light grid (1).

4. A method according to one of claims 1 to 3, **characterised in that** non-activated regions of transmitters (2a) are used as display elements in the object detections.

5. A method according to one of the claims 1 to 4, **characterised in that** geometries and/or positions and/or speeds of objects (6) are detected with the light grid (1).

6. Method according to one of claims 1 to 5, **characterised in that**, for object detection, the current received signals of the receivers (4a) are compared with predetermined reference values.

## Revendications

1. Procédé de détection d'objets (6) au moyen d'une grille lumineuse (1) qui présente un agencement en forme de matrice d'émetteurs (2a) émettant des faisceaux lumineux (3) et un agencement en forme de matrice de récepteurs (4a) recevant des faisceaux lumineux (3), un agencement d'émetteurs (2) comprenant un agencement d'émetteurs (2a) disposés en colonnes et rangées étant prévu sous la forme de la matrice des émetteurs (2a), et un agencement en matrice de récepteurs (4a) étant prévu sous la forme du dispositif en matrice des récepteurs (4a), se composant d'un agencement de récepteurs (4a) disposés en colonnes et en rangées, dans lequel, pour la détection d'objets, l'interruption d'axes de faisceau qui sont chacun formés par des faisceaux lumineux (3) guidés d'un émetteur (2a) vers au moins un récepteur (4a) associé est évaluée et dans lequel, pour la détection d'objets (6), des zones sélectivement prédéterminées des agencements en matrice des émetteurs (2a) et récepteurs (4a) peuvent être activées, **caractérisé en**
**ce que** les zones des agencements en forme de matrice des émetteurs (2a) et des récepteurs (4a), activés pour les détections d'objets, sont prédéterminées en fonction des variables caractéristiques des objets (6) à détecter.

2. Procédé selon la revendication 1, **caractérisé en ce que**, dans les zones activées des agencements en forme de matrice des émetteurs (2a) et des récepteurs (4a), les axes de faisceau formés par des émetteurs (2a) et des récepteurs (4a) individuels sont activés individuellement de manière cyclique les uns après les autres.

3. Procédé selon l'une des revendications 1 ou 2, **caractérisé en ce que** les zones des agencements en forme de matrice des émetteurs (2a) et des récepteurs (4a), activées pour les détections d'objets, sont modifiées indépendamment des valeurs mesurées préalablement déterminées de la grille lumineuse (1).

4. Procédé selon l'une des revendications 1 à 3, **caractérisé en ce que** des zones non activées d'émetteurs (2a) sont utilisées comme éléments d'affichage pour les détections d'objets.

5. Procédé selon l'une des revendications 1 à 4, **caractérisé en ce que** des géométries et/ou des positions et/ou des vitesses d'objets (6) sont détectées avec la grille lumineuse (1).

6. Procédé selon l'une des revendications 1 à 5, **caractérisé en ce que**, pour la détection d'objets, les signaux de courant reçus des récepteurs (4a) sont comparés à des valeurs de référence prédéterminées.
